# EUROPEAN PATENT APPLICATION

(11) **EP 1 098 531 A2**
(43) Date of publication of application: **09.05.2001**
(21) Application number: 00307276.6
(22) Date of filing: 23.08.2000
(51) Int. Cl.: H04N 7/52, H04N 7/24

(54) **Embedding of internet protocol packets in an SDI or SDTI signal**

(30) Priority: 05.11.1999 GB 9926323
(71) Applicant: SONY UNITED KINGDOM LIMITED, Weybridge KT13 0XW (GB)
(72) Inventor: Wilkinson, James Hedley, Tadley, Hampshire RG26 3UN (GB)
(74) Representative: Pratt, Richard Wilson

(57) **Abstract**

An SDTI signal has, in the horizontal ancillary data space (HANC), in addition to the SDTI header data, Internet Protocol (IP) packets embedded in one ore more ancillary data packets. An SDI system comprises a plurality of video signal processors (2, 10) interconnected via SDI interfaces. The SDI interfaces include means (14, 16) for deriving from the horizontal ancillary data space, and for inserting into the horizontal ancillary data space, Internet Protocol (IP) packets embedded in one or more ancillary data packets.

## Description

The present invention relates to an SDTI system, an SDI Signal, an SDTI signal, a signal processor for use in an SDTI system and a method of controlling signal processors and a video signal router.

SDI (Serial Digital Interface) and SDTI (Serial Data Transport Interface) connection are well known from References [1] and [2]. The invention and its background will be discussed herein by way of example to SDTI systems, but it will be appreciated that the invention can also be applied to SDI systems.

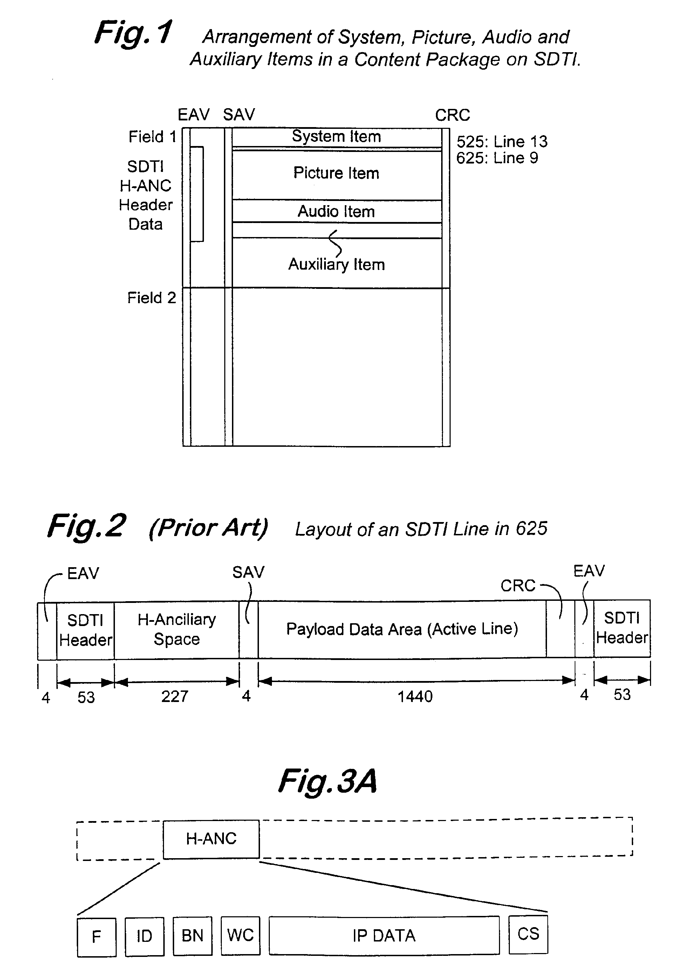

Referring to Figure 1 SDTI transmits packets in a signal structure comprising lines of television frames. Ancillary data is carried in the horizontal blanking interval of each line and data is carried in the payload area of each line where the payload area comprises the active line interval. The non-active, horizontal blanking intervals of the lines contain ancillary data which includes the source and destination addresses of the data in the active line intervals.

Referring to Figure 2, one line of an SDTI signal is shown for use in 625 line frame of a 625/25 system. It comprises, in order, 4 bytes of EAV (End Active Video) 53 bytes of SDTI header, 227 bytes of Horizontal Auxiliary Date Space (HANC) 4 bytes of SAV (Start Active Video) and a payload data space of 1440 bytes which may include a Cyclic Redundancy Code (CRC). The next line has the same format beginning with the EAV followed by the SDTI header.

As shown in Figure 1 the EAV, HANC and SAV occur in the horizontal blanking interval of the video line.

As is evident from the foregoing discussion SDTI uses the standard structure of a video frame, and thus is well suited for transfer of data within and between broadcast studios or plants processing video. Thus, SDTI is used to transfer streaming video, audio and data around broadcast plants or studios with high reliability and accurate timing delivery. SDTI is based on the Serial Digital Interface (SDI [1]) which has been established for over 10 years and for which there is considerable equipment support. SDTI is able to use the same infrastructure as SDI, providing only point to point connection is required.

Other systems using network technologies are allowing users the freedom to freely exchange audio, video and data around the plant from desktop terminals. Such use is establishing a new benchmark for broadcast and professional systems which current SDTI does not provide.

Historically, RS422 connections have provided a control infrastructure for analogue and digital streaming connections. Known protocols which reside on RS422 include ES-Bus and a Sony protocol. More recently, it has been suggested that Ethernet solutions can provide a replacement for RS422. However, RS422 provides a short and predictable timing loop which is necessary in machine control systems. It is also a pervasive solution.

The present inventor has recognised that it is desirable to provide, in an SDTI system, a streaming connection for data in the payload data space, together with networking and/or predictable control of machines connected by SDTI.

According to one aspect of the present invention, there is provided an SDTI signal having, in the horizontal ancillary data space (HANC), Internet Protocol (IP) packets.

By providing IP packets in the HANC area of an SDTI signal, an SDTI system has the ability for full networking (via suitable gateways) to other networked systems, and also has the ability for duplex networking within the SDTI system.

Furthermore, the networking capability is separate from and does not detract from the ability of the SDTI system to transfer data in the active payload area of the SDTI signal.

According to another aspect of the invention, there is provided a signal processor for use in an SDTI system, the processor including means for deriving from the horizontal ancillary data space, and/or for inserting into the horizontal ancillary data space, Internet Protocol (IP) packets.

The signal processor may be a video signal processor. Examples of a video signal processor include a digital video tape recorder/player (DVTR), a digital video disc recorder/player, a video server, and other machines used in video signal processing plants.

The IP packets in the HANC allow background duplex control of a processor or storage device independently of the data in the active payload area.

According to a further aspect of the invention, there is provided an SDTI system comprising a plurality of signal processors interconnected via SDTI interfaces, the SDTI interfaces including means for deriving from the horizontal ancillary data space, and/or for inserting into the horizontal ancillary data space, Internet Protocol (IP) packets.

According to a yet further aspect of the invention, there is provided a method of controlling signal processors which processors are interconnected via SDTI interfaces, the method comprising transferring control data, for controlling the processors, to and from the processors using Internet Protocol (IP) packets containing the control data and which IP packets are transported in the Horizontal Ancillary Data Space (HANC) of the SDTI signals.

The processors of the SDTI system and of the method may be video signal processors.

The IP packets are preferably embedded in one or more ancillary data packets in the HANC.

According to yet another aspect of the invention, there is provide a video signal router having means for deriving machine control data from IP packets, the machine control data including routing information, and means for establishing a video signal path in accordance with the said routing information.

For a better understanding of the present invention, reference will now be made by way of example to the accompanying drawings in which:
Figure 1 is a schematic diagram of a known SDTI signal;
Figure 2 is a schematic diagram of one line of the signal of Figure 1;
Figure 3A is a schematic diagram of one line of an SDTI signal including a HANC containing IP data according to an embodiment of the present invention;
Figure 3B is a schematic diagram illustrating the distribution of IP data over a plurality of lines;
Figure 4 is a schematic diagram of video signal processors and storage devices linked by an SDTI system according to the present invention;
Figure 5 is a schematic diagram of a multiplexer useful in a video signal processor of Figure 4;
Figure 6 is a schematic diagram of a demultiplexer and machine controller useful in a video signal processor of Figure 5; and
Figure 7 is a schematic block diagram of a system in accordance with the present invention and including an intelligent router.

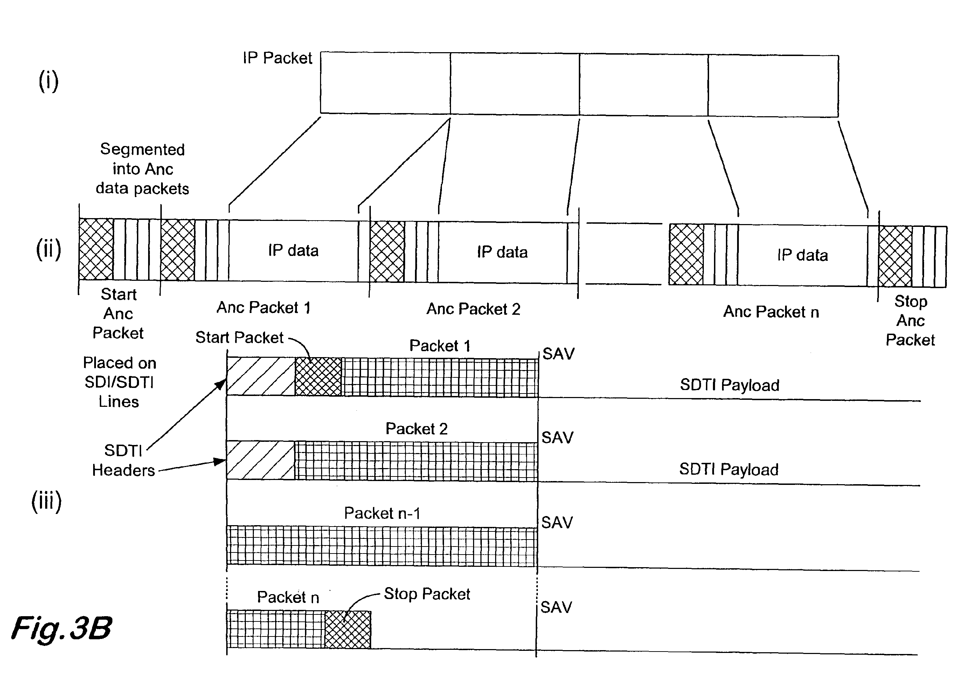

An SDTI signal according to an illustrative embodiment of the present invention has a basic structure for one line as shown in Figure 2. In accordance with an embodiment of the invention the HANC data space (HANC) is arranged as shown in Figure 3A. The HANC data area of the lines is available data space. The space may be filled with one or more HANC data packets as illustrated in Figure 3B. The HANC data packet according to the embodiment of Figure 3A comprises: a 3 byte flag F indicating the HANC; a one byte data identification ID which in this case identifies that the HANC data space DATA contains IP packets; a one byte data block number BN containing a block number in the range 0 to 255; a one byte count WC indicating the word count of the data block, the data space DATA; and a one byte check sum CS.

Internet Protocol (IP) packets are well known. An IP packet may comprise up to 64 kilo bytes of data. The HANC data space of one line of an SDTI signal has space for only 220 bytes. Thus the largest IP packet of 64 Kbytes would be distributed over about 64000/220 lines, i.e. about 290 lines. Typically IP packets are much shorter in the order of a few hundred bytes or a few kilobytes.

Referring to Figure 3B, (i) indicates an IP packet having more than 220 bytes and upto 64 bytes. The packet is therefore split into n sub-packets referred to as "Anc Packets" and distributed over the IP data spaces of the HANCs of n lines as shown in (ii) and (iii). The Anc Packets preferably conform to Ancillary Data Packets as defined in SMPTE 291M. Figure 3A illustrates the basic structure of such a packet. The first Anc Packet is inserted into an HANC data packet as shown in Figure 3B(ii). That first Anc Packet is preceded by a "Start Anc Packet" indicating the beginning of an IP packet which is distributed over n ANC packets in n lines, there being one ANC packet containing IP data per line. The IP packet ends as indicated by a "Stop Anc Packet" following ANC Packet n.

In accordance with a preferred embodiment of the present invention, the IP packets are used to transfer machine control data for controlling machines, e.g. video signal processors, linked by an SDTI system using the signal of Figures 3A and B. The IP packets may also include data produced at the machines indicating the states of the machines for monitoring the status of the machines. Furthermore, the IP packets may contain other information such as messages being exchanged between operators of the machines.

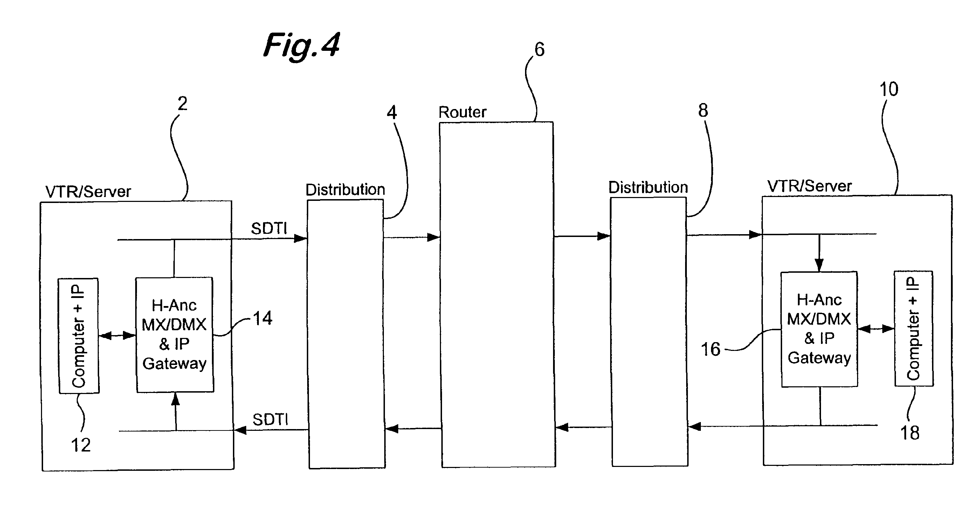

Figure 4 is a schematic diagram of machines such as video signal processors linked in a network. One video store 2 is linked to another video store 10 via distribution equipment 4, 8, and/or one or more routers 6 as are conventional in the art. The equipment 4, 8 and the router 6 pass the SDTI signals including the IP packets, without decoding them, between the machines 2 and 10. Examples of the video stores include video tape recorders, video disc recorders and video servers.

The video store 2 or 10 includes for example a computer 12, 18 having software for generating and decoding IP packets. The computer may have an input device e.g. a keyboard for generating data such as messages. The computer controls the store 2, 10 amongst other functions. A multiplexer/demultiplexer is provided as an interface 14, 16 between the computer and the SDTI network. The interface 14, 16 has an input connection for receiving SDTI signals from the network and an output for providing SDTI signals to the network. The computers 12, 18 have unique MAC addresses for the purpose of receiving and transmitting IP packet.

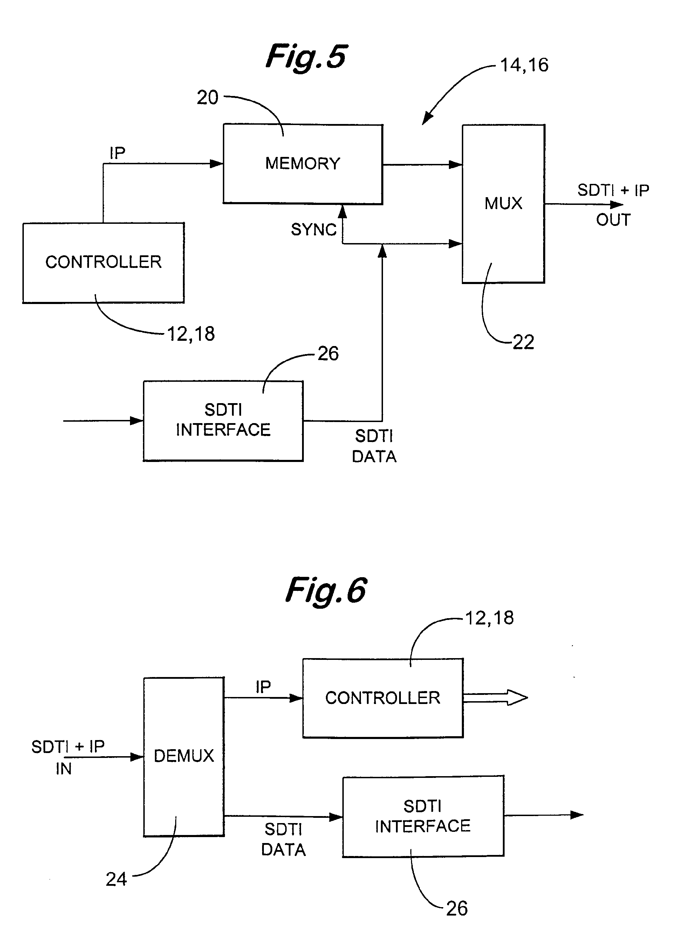

Referring to Figure 5, an example of the output stage of the interface 14, 16 is shown schematically. The computer 12, 18, which is also the machine controller, produces an IP packet containing for example control status data, data for controlling another machine or a message. The IP packet is stored temporarily in a buffer memory 20. The SDTI signal, into the HANC of which the IP packet is to be inserted, synchronises the read out of the IP packet from the memory 20 to the multiplexer 22. The multiplexer inserts the IP packet into the HANC data space together with the HANC data packet formatting. The SDTI signal is provided by an SDI interface 26, which signal receives its payload from the video store.

Referring to Figure 6, an example of the input stage of the interface 14, 16 is shown schematically. The computer 12, 18, which is also the machine controller, receives an IP packet containing, for example, data for controlling the machine of which it is part or a message. The SDTI signal, into the HANC of which the IP packet is inserted, is fed to a demultiplexer 24 which separates the IP packet from the HANC data space. The SDTI signal minus the IP packet is fed to one output of the demultiplexer 24, and the IP packet is fed to another output of the demultiplexer 24. The computer 12, 18 is coupled to the another output. The SDTI signal is fed to an SDI interface 26. The video data in the SDTI payload is then supplied to the video store from the interface 26.

The embodiment of the invention described above allows the transfer of control and other data over an SDTI network independently of the primary SDTI data flow carried in the active line interval of each SDTI line. The bandwidth available in the HANC data space allows many control and data transfer processes to occur. Furthermore, since SDTI is essentially a point to point (e.g. star ) configuration packet contention may be avoided. Furthermore the use of IP packets allows the SDTI system to be connected to other external networks.

Various modifications may be made to the embodiment described above. The router does not need to be "intelligent": it may simply pass the IP packets without decoding them. The router may be intelligent and decode IP packets in the SDTI data stream. Such packets may be used to control the router to set up signal paths.

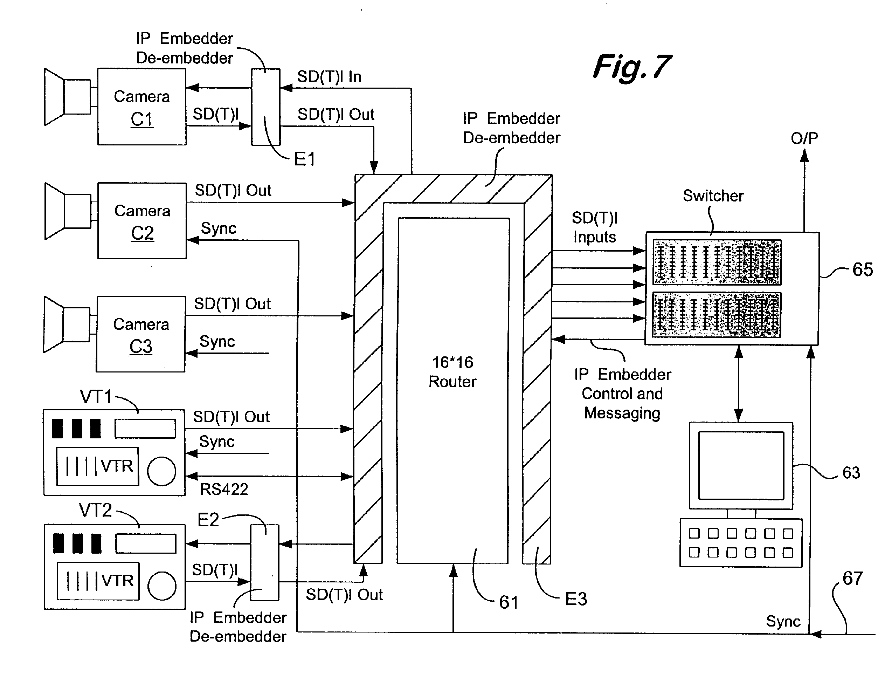

Figure 7 is a schematic block diagram of an SDTI system having an intelligent router.

The SDTI network of Figure 8 comprises: a router 61 having an IP embedder/de-embedder E3 associated therewith; cameras C1, C2, C3; VTRs VT1, VT2; IP embedders/de-embedders E1, E2 associated with camera C1 and VTR VT2 respectively, a computer 63; a switcher 65; and a sync source 67.

The cameras C1, C2, C3, VTRs VT1, VT2 and switcher 65 are inter-connected via the router in an SDTI network.

Cameras C1, C2, C3 produce SDTI data for transmission via the network to e.g. the VTRs VT1 and VT2 via the route 61 or to the switcherr 65 via the router 61. The switcher65 has an output O/P to other network(s) and , under the control of the computer 63 selectively connects any of its SDTI inputs to the output O/P..

In accordance with embodiments of the invention, the HANC spaces of the SDTI signals contain IP packets contained in Ancillary Data Packets as described above. These IP packets may contain messages and/or control data generated by the computer 63.

The switcher 65 includes an IP gateway which embeds IP packets into the Ancillary Data Packets for transfer via the router 61 selectively to any of the cameras, the VTRs and the router.

The router 61 routes SDTI data to e.g. camera C1 as determined by SDTI header data or by IP packet data. The camera C1 has the embedder/de-embedder E1 which can derive the IP data from the SDTI and transmit it to the camera. The embedder E1 can also insert IP data generated at the camera into the SDTI data for transfer elsewhere in the network. The VTR VT2 similarly has the embedder/de-embedder E2 for receiving and/or transmitting IP data.

Cameras C2 and C2 in this example can generate SDTI data which is transmitted to the router 61. They cannot receive SDTI data and IP data.

The VTR VT1 can generate SDTI data which is transmitted to the router 61. VTR VT1 has an RS422 port. The router 61 has the embedder/de-embedder E3 associated therewith. The RS422 port of VTR VT1 communicates with the embedder/de-embedder E3 allowing data to be transmitted from the VTR to the embedder E3 for embedding in an SDTI signal and to allow the de-embedder E3 to decode data from IP packets and transmit it via the RS422 port to the VTR VT1.

The embedder/de-embedder E3 of the router allows data such as control data and/or messages to be transmitted to and from devices such as the cameras (e.g. C2, C3) and the VTRs (e.g. VT1) which do not have associated IP embedders/deembedders but which do have other suitable communications ports such as RS422. The de-embedder E3 decodes IP data and transmits it to the devices. The embedder E3 receives data from the devices (C2, C3, VT1) and embeds the data in IP packets for transmission to other devices in the network. The embedder/de-embedder E3 may also allow control of the router 61 by means of IP packets carried in the SDTI data stream.

The router 61 and embedder/de-embedder E3 together allow the router to respond to machine control data contained in IP packets in the SDTI Ancillary Data Packets and switch video signal paths to establish a connection for IP packets, the SDTI pay load or both.

Thus the router 61 and embedder/de-embedder E3 allow control of machines and routing by data in IP packets and/or the transmission/reception of messages.

### References

[1] SMPTE 259M
[2] Interconnectivity in the DTV Era: The Emergence of SDTI by A.
Legault and J. Matey International Broadcasting Convention, Amsterdam 10-14 September 1999: and SMPTE 305M.

## Claims

**1.** An SDI signal having, in the horizontal ancillary data space (HANC), Internet Protocol (IP) packets embedded in one or more ancillary data packets.

**2.** An SDTI signal having, in the horizontal ancillary data space (HANC), Internet Protocol (IP) packets embedded in one or more ancillary data packets.

**3.** A signal according to claim 1 or 2, wherein the IP packets contain machine control data.

**4.** A signal according to claim 1 or 2, wherein the IP packets contain message data.

**5.** A signal processor for use in an SDTI system, the processor including means for deriving from the horizontal ancillary data space, and/or for inserting into the horizontal ancillary data space, Internet Protocol (IP) packets embedded in one or more ancillary data packets.

**6.** A signal processor according to claim 5 or 6, for use in a system in which the IP packets contain machine control data, the processor comprising means for deriving the control data from the IP packets and means for controlling the processor in dependence on the control data.

**8.** An SDTI system comprising a plurality of signal processors interconnected via SDTI interfaces, the SDTI interfaces including means for deriving from the horizontal ancillary data space, and/or for inserting into the horizontal ancillary data space, Internet Protocol (IP) packets embedded in one or more ancillary data packets.

**9.** A system according to claim 8, for use in a system in which the IP packets contain machine control data, wherein at least one of the processors comprises means for deriving the control data from the IP packets and means for controlling the processor in dependence on the control data.

**10.** A system according to claim 9, for use in a system in which the IP packets contain machine control data, wherein at least one of the processors comprises means for producing control data to be inserted into the IP packets and means for inserting the data into the packets.

**11.** A method of controlling signal processors, which processors are interconnected via SDTI interfaces, the method comprising transferring machine control data between the processors using Internet Protocol Packets containing the control data and which packets are transported in the horizontal ancillary data space.

**12.** A video signal router having means for deriving machine control data from IP packets, the machine control data including routing information, and means for establishing a video signal path in accordance with the said routing information.

**13.** A router according to claim 12, wherein the establishing means routes IP packets in accordance with the routing information.

**14.** A router according to claim 12 or 13 wherein the establishing means routes video data in accordance with the routing information.

**15.** A router according to claim 12, 13 or 14, comprising means for deriving the machine control data from IP packets embedded in the Ancillary Data packets in the horizontal ancillary space of an SDTI signal.
